# EUROPEAN PATENT APPLICATION

(11) **EP 3 483 975 A1**
(43) Date of publication of application: **15.05.2019**
(21) Application number: 17824285.5
(22) Date of filing: 05.07.2017
(51) Int. Cl.: H01M 10/0585, H01M 2/26, H01M 4/13, H01M 4/139

(54) **LITHIUM ION SECONDARY BATTERY AND METHOD FOR MANUFACTURING SAME**

(30) Priority: 05.07.2016 JP 2016133464
(71) Applicant: Sekisui Chemical Co., Ltd., Osaka-shi, Osaka 530-8565 (JP)
(72) Inventor: MATSUSHIMA Kazushi, Tsukuba-shi Ibaraki 300-4292 (JP); KUNIKAWA Tomoki, Tsukuba-shi Ibaraki 300-4292 (JP)
(74) Representative: Müller-Boré & Partner Patentanwälte PartG mbB
(86) International application number: PCT/JP2017/024648
(87) International publication number: WO 2018/008682

(57) **Abstract**

A lithium ion secondary battery having a configuration wherein one of its cathode and anode has, on at least one of surfaces of its current collector (11), a coated section having an active material layer and a non-coated section (11A) devoid of an active material layer, a terminal tab (14) is attached to the non-coated section (11A), the non-coated section (11A) is positioned at one end of the current collector (11) in a longitudinal direction (XI), and the non-coated section (11A) of the current collector (11) has an electrolyte leakage prevention zone (13) which is at least one ridge or groove extending in a width direction (X2) between a tab attachment section (11a) to which the terminal tab (14) is attached and the active material layer (12).

## Description

### TECHNICAL FIELD

The present invention relates to a lithium ion secondary battery, and a method for manufacturing the same.

Priority is claimed on Japanese Patent Application No. 2016-133464, filed July 5, 2016, the contents of which are incorporated herein by reference.

### BACKGROUND ART

A lithium ion secondary battery is generally manufactured by a method in which a cathode plate formed of a cathode current collector coated with a cathode active material and an anode plate formed of an anode current collector coated with an anode active material are stacked with an electrolyte layer serving as a separator interposed therebetween (see, for example, Patent Document 1).

As a known technique for drawing electricity from the cathode and the anode of such a lithium ion secondary battery, a non-coated section devoid of an active material layer, i.e., a section not coated with an active material, is provided on a current collector at one end in a longitudinal direction extending in one direction of the current collector, and a terminal tab is welded to the non-coated section so as to protrude from the current collector (see, for example, Patent Document 2).

### Description of Prior Art

### Patent Document

Patent Document 1: Japanese Unexamined Patent Application Publication No. 2015-88394
Patent Document 2: Japanese Unexamined Patent Application Publication No. 2012-54029

### DISCLOSURE OF INVENTION

### Problems to be Solved by the Invention

However, conventional methods for manufacturing such a lithium ion secondary battery having an electrode stack as described above have a problem in that a section to which a terminal tab is to be welded (i.e., a tab welding section) is sometimes stained with an electrolyte or the like, which decreases the welding strength. The decrease in welding strength may cause the displacement or detachment of the terminal tab, and may increase the internal resistance inside the battery, thereby causing a risk of decreasing the reliability of the conduction in the secondary battery.

The present invention has been made in view of the above-stated problem, and it is an object of the present invention to provide a lithium ion secondary battery that can prevent the electrolyte from adhering to the terminal tab attachment section, to thereby enable suppression of decrease in the bonding strength of the terminal tab and ensure a secure attachment of the terminal tab, and a method for manufacturing the same.

### Means to Solve the Problems

Embodiments of the present invention made in order to solve the above-mentioned problem and achieve the purposes are as enumerated below.
(1) A lithium ion secondary battery in one aspect of the present invention comprises:
   an electrode stack comprising a cathode and an anode which are stacked with an electrolyte layer interposed therebetween; and a terminal tab, wherein one of the cathode and the anode has, on at least one of surfaces of its current collector, a coated section having an active material layer and a non-coated section devoid of an active material layer, the terminal tab is attached to the non-coated section, the non-coated section is positioned at one end of the current collector in a first direction extending in one direction of the electrode stack, and the non-coated section of the current collector has an electrolyte leakage prevention zone which is at least one ridge or groove extending, as viewed in plan,
   in a second direction orthogonal to the first direction between a tab attachment section to which the terminal tab is attached and the electrode active material layer.

In this instance, since the electrolyte leakage prevention zone extending in the second direction is provided between the tab attachment section at the non-coated section and the active material layer of the current collector, the migration of electrolyte having overflown from the coated section during stacking of the electrodes can be regulated by the electrolyte leakage prevention zone. For example, when the electrolyte leakage prevention zone is a ridge, the ridge becomes a weir that can prevent the electrolyte from flowing over the electrolyte leakage prevention zone and leaking to the side of the tab attachment section. Further, when the electrolyte leakage prevention zone is a groove, the groove is formed between the electrolyte layer and the tab attachment section, into which the electrolyte overflowing from the coated section is allowed to flow; therefore, the groove can prevent the electrolyte from leaking to the side of the tab attachment section. Thus, it is possible to prevent the tab attachment section after stacking from being stained with adhering electrolyte having overflown from the coated section, and to ensure a secure attachment of the terminal tab under predetermined attaching conditions.

As a result, a decrease in the bonding strength of the terminal tab can be suppressed, which, in turn, can prevent the attached terminal tab from being displaced or detached due to external vibration or impact, so that a disconnection or the like can be prevented and a decrease in reliability of conduction in the secondary battery can be suppressed.
(2) In the lithium-ion secondary battery according to (1) above, the electrolyte leakage prevention zone may extend over entire length of the non-coated section in the second direction.
   In this instance, the coated section having an active material layer and the tab attachment section of the current collector at its non-coated section devoid of an active material layer can be completely separated without a gap by the electrolyte leakage prevention zone, thereby enabling a more secure prevention of leakage of the electrolyte to the side of the tab attachment section during stacking.
(3) In the lithium-ion secondary battery according to (1) or (2) above, the electrolyte leakage prevention zone may protrude from a surface of the current collector on which the active material layer is formed.
   In this instance, the ridge becomes a weir that can prevent the electrolyte from flowing over the electrolyte leakage prevention zone and leaking to the side of the tab attachment section.
(4) The present invention, in another aspect thereof, provides a method for manufacturing a lithium-ion secondary battery comprising: an electrode stack comprising a cathode and an anode which are stacked with an electrolyte layer interposed therebetween; and a terminal tab, wherein one of the cathode and the anode has, on at least one of surfaces of its current collector, a coated section having an active material layer and a non-coated section devoid of an active material layer. The method comprises: a step of applying an active material to a surface of the current collector, while leaving a non-coated section devoid of an active material layer on the surface of the current collector at one end thereof in a first direction extending in one direction of the current collector; a step of forming an electrolyte leakage prevention zone at the non-coated section between a tab attachment section to which the terminal tab is attached and the electrode active material layer, the electrolyte leakage prevention zone being at least one ridge or groove extending, as viewed in plan, in a second direction orthogonal to the first direction; a step of stacking a plurality of electrodes, each having the electrolyte leakage prevention zone formed thereon, with an electrolyte layer interposed between the electrodes; and a step of attaching the terminal tab to the tab attachment section in the non-coated section devoid of an active material layer such that the terminal tab protrudes from the current collector.
(5) In the method according to (4) above, the electrolyte leakage prevention zone may be formed by folding by pressing.
   In this instance, by performing the pressing before or after the step of applying the active material while leaving a non-coated section devoid of an active material layer on the current collector, it is possible to easily form the electrolyte leakage prevention zone by folding the non-coated section devoid of an active material layer. By adopting the pressing, it is possible to continuously and efficiently perform the subsequent step of stacking multiple electrodes having the electrolyte leakage prevention zone formed thereon while interposing an electrolyte layer therebetween.

### Effect of the Invention

According to the lithium ion secondary battery and the method for producing the same in respective aspects of the present invention, it is possible to prevent the electrolyte from adhering to the terminal tab attachment section, thereby enabling suppression of decrease in the bonding strength of the terminal tab and ensuring a secure attachment of the terminal tab.

### BRIEF DESCRIPTION OF THE DRAWINGS

FIG. 1 is a longitudinal sectional view schematically showing the configuration of a lithium ion secondary battery according to one embodiment of the present invention.
FIG. 2 is a plan view showing a part of the lithium ion secondary battery shown in FIG. 1.
FIG. 3 is a side sectional view of the electrode shown in FIG. 2.
FIG. 4 is a side sectional view of a modified example of the electrode of the lithium ion secondary battery, which corresponds to FIG. 3.
FIG. 5A is a side sectional view of a modified example of the electrode of the lithium ion secondary battery, which corresponds to FIG. 3.
FIG. 5B is a side sectional view of a modified example of the electrode of the lithium ion secondary battery, which corresponds to FIG. 3.

### DESCRIPTION OF THE EMBODIMENTS

Referring to the annexed drawings, the embodiments of the lithium-ion secondary battery and the method for manufacturing the same are described below.

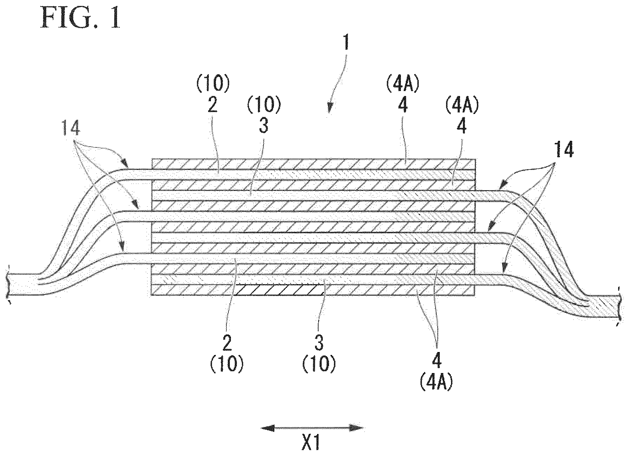

As shown in FIG. 1, the lithium ion secondary battery 1 of the present embodiment has cathodes 2, anodes 3, and separators 4 each interposed between the cathode 2 and the anode 3, wherein the separators also serve as electrolyte layers. Further, the lithium ion secondary battery 1 shown in FIG. 1 is provided with an electrode stack having a plurality of electrode units each formed by sequentially stacking the anode 3, the separator 4 and the cathode 2 which have a rectangular shape in plan view. Further, on the outward side of the electrode stack, an anode 3 having a lithium metal foil disposed on one side thereof is laminated over a separator 4 such that the anode 3 is positioned as the outermost layer of the electrode stack.

The cathode 2 and the anode 3 are configured to have respective terminal tabs 14 protruding from respective end portions thereof.

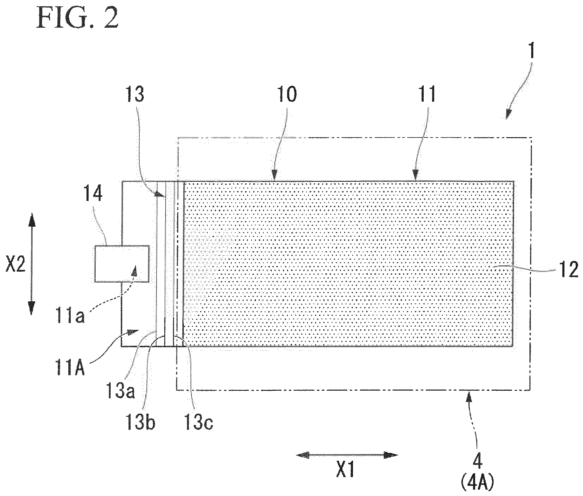

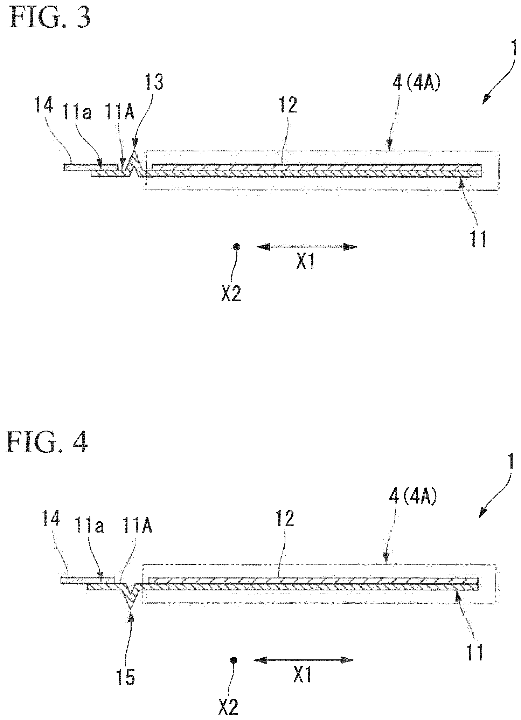

The lithium ion secondary battery 1 has a configuration in which the multi-layer electrode stack (double-layer electrode stack in this example) is packaged with an outer casing formed by an aluminum material, a polymer film or the like, and the outer casing is sealed at its outer periphery while allowing the terminal tab 14 connected to the cathode 2 and the terminal tab 14 connected to the anode 3 to protrude out of the outer casing. Note that FIG. 2 and FIG. 3 show only one of the cathode 2 and anode 3 described above (hereinafter, referred to as "electrode plate 10" as needed).

As shown in FIG. 2 and FIG. 3, the electrode plate 10 (cathode 2 or anode 3) is composed of, for example, a current collector 11 made of a copper foil formed in an elongated shape in plan view, and electrode active material layers 12 formed by application of an active material on both sides of the current collector excluding a certain area of one end thereof in the longitudinal direction X1 (first direction extending in one direction). That is, one end of the current collector 11 in the longitudinal direction X1 is the non-coated section 11A devoid of an active material layer, and a part of the non-coated section 11A serves as the tab welding section 11a to which the terminal tab 14 is to be welded (tab attachment section).

Here, a direction orthogonal to the longitudinal direction X1 in plan view is defined as a width direction X2 (second direction).

As the current collector 11 of the cathode 2 (cathode current collector), a conductive metal foil can be used, and examples of applicable material include aluminum, stainless steel, nickel, titanium, and an alloy thereof.

As the current collector 11 of the anode 3 (anode current collector), a conductive metal foil is used, and examples of applicable material include copper, stainless steel, nickel, titanium and an alloy thereof.

The cathode active material layer (electrode active material layer 12) is, for example, formed by coating the cathode current collector with a cathode slurry in which a cathode active material, a conductive auxiliary agent and a binding agent to serve as a binder are dispersed in a solvent. For example, the cathode slurry is coated on one of the surfaces of the current collector 11 at a region of the current collector 11 between both ends thereof in the widthwise direction X2.

The cathode active material is not particularly limited and, for example, a metal oxide lithium compound represented by the general formula LiMₓO_{y} (wherein M represents a metal, x and y respectively represent ratios of metal M and oxygen O) can be used. Specifically, as the metal oxide lithium compound, it is possible to use lithium cobalt oxide, lithium nickel oxide, lithium manganese oxide, ternary compounds thereof (i.e., manganese-nickel-cobalt compounds), and lithium iron phosphate.

As the conductive auxiliary agent in the cathode active material layer, for example, an acetylene black, a carbon nanofiber or the like can be used. As the binding agent, for example, polyvinylidene fluoride or the like can be used.

The anode active material layer (electrode active material layer 12) is, for example, formed by coating the current collector with an anode slurry in which an anode active material, a binding agent to serve as a binder, and, if necessary, a conductive auxiliary agent are dispersed in a solvent. For example, the anode slurry is coated on one of the surfaces of the current collector 11 at a region of the current collector 11 between both ends thereof in the widthwise direction X2.

The anode active material is not particularly limited; for example, it is possible to use a carbon material formed of carbon powder, graphite powder or the like, and a metal oxide such as lithium titanate. From the viewpoint that a lithium ion secondary battery 1 having a higher capacity can be realized, it is preferable to use a silicon-based active material.

As the binding agent, for example, polyvinylidene fluoride or the like can be used. As the conductive auxiliary agent, for example, acetylene black, carbon nanotube or the like can be used.

The terminal tabs 14 provided on the respective current collectors 11 of the cathode 2 and the anode 3 are joined to the non-coated sections 11A of the current collectors 11 so as to protrude outward in the longitudinal direction X1. The terminal tab 14 of the cathode 2 is formed of, for example, an aluminum plate or the like.

The terminal tab 14 of the anode 3 is formed of, for example, a nickel-plated copper plate or the like.

The electrolyte layer is formed, for example, by applying a liquid or semi-solid (gel-like) electrolyte 4A on the surface of a strip-shaped anode 3 or by laminating a solid electrolyte 4A on the surface of the strip-shaped anode 3. The electrolyte layer may be provided on either one of the surfaces of the strip-formed cathode 2 and anode 3, and for example, may be provided on both of the surfaces of the cathode 2 and the anode 3.

Further, the electrolyte layer may function as a separator as in the present embodiment, and for example, may have a configuration in which the electrolyte 4A is impregnated into the voids of an insulating porous material. The electrolyte 4A is preferably present also in the voids of the electrode active material layers 12 of the cathode 2 and the anode 3 as well as in the electrolyte layer.

The operation for impregnating the electrolyte 4A into the voids of the insulating porous material or causing the electrolyte 4A to be present in the voids of the electrode active material layers 12 of the cathode 2 and the anode 3 as described above may be implemented while heating or pressurizing so as to shorten the time for such operation. The heating or pressurizing increases the risk of the electrolyte 4A leaking out of the intended area. Therefore, it is preferable to provide an electrolyte leakage prevention zone which is at least one ridge or groove between the tab welding section 11a to which the terminal tab 14 is attached and the electrode active material layer 12.

When it is intended to form the electrolyte layer with a semi-solid, gel-like electrolyte, for example, the electrolyte layer may be formed by coating the surface of an electrode plate with a material which is composed of a polymer matrix and a non-aqueous electrolyte solution (i.e., a non-aqueous solvent and an electrolyte salt), and exhibits adhesiveness on their surfaces upon gelation. Alternatively, as described below, it is also possible to use a gel electrolyte comprising a polymer matrix and a non-aqueous solvent, and is solidified after coating to become a solid electrolyte.

In this embodiment, the electrolyte 4A to be used may either be semi-solid or solid. However, when using a semi-solid gel electrolyte, one which exhibits adhesiveness when applied to the cathode 2 or the anode 3 is used, and it is preferable to use a material which forms a free-standing film which does not come off the surface of the cathode 2 or the anode 3.

As the polymer matrix, for example, it is possible to use a polyester, a polyamine, a polyphosphazene, a polysiloxane and the like as well as a polyvinylidene fluoride (PVDF), polyvinylidene fluoride-hexafluoropropylene copolymer (PVDF-HFP), a polyacrylonitrile, and a polyalkylene ether such as polyethylene oxide or polypropylene oxide.

Examples of the non-aqueous solvent include lactone compounds such as γ-butyrolactone; carbonate ester compounds such as ethylene carbonate, propylene carbonate, dimethyl carbonate, diethyl carbonate, and methyl ethyl carbonate; carboxylic acid ester compounds such as methyl formate, methyl acetate, and methyl propionate; ether compounds such as tetrahydrofuran, and dimethoxyethane; nitrile compounds such as acetonitrile; sulfone compounds such as sulfolane; amide compounds such as dimethylformamide. These compounds can be used individually or as a mixture of two or more types.

Alternatively, a gel electrolyte 4A may be solidified after coating so as to form a solid electrolyte layer. In this case, the gel electrolyte may be one obtained by mixing with a solvent, examples of which include nitrile compounds such as acetonitrile; ether compounds such as tetrahydrofuran; and amide compounds such as dimethylformamide, which can be used individually or as a mixture of two or more types.

The electrolyte salt is not particularly limited, and it is possible to use electrolyte salts such as lithium salts, examples of which include lithium hexafluorophosphate, lithium perchlorate, and lithium tetrafluoroborate.

The material of the separator 4 is not particularly limited, and for example, it is possible to use olefin type materials such as polyethylene and polypropylene, and cellulosic materials. A nonwoven fabric or the like made of any of these materials can be used as the separator 4.

As shown in FIG. 1 and FIG. 2, the non-coated section 11A which is not coated with an active material layer has formed thereon a ridge 13 (electrolyte leakage prevention zone) extending in the width direction X2 between the tab welding section 11a to which the terminal tab 14 is welded and the electrode active material layer 12. The ridge 13 is formed over the entire length in the width direction X2 and is formed by mountain-folding the current collector along parallel broken lines 13a, 13b, 13c extending in the width direction X2. That is, the ridge 13 is formed so as to protrude from the surface of the current collector 11 on which the electrode active material layer 12 is formed. The protrusion amount of the ridge 13 from the current collector 11 is not particularly limited and can be arbitrarily set as long as the protrusion amount is set to a height such that the electrolyte 4A coated on the electrode plate 10 does not climb over the ridge 13 to leak into the non-coated section 11A at least during the manufacturing.

In the present embodiment, the number of the ridge 13 is one (one mountain), but multiple rows of the ridge 13 may be provided.

Next, as shown in FIG. 2 and FIG. 3, the lithium ion secondary battery 1 described above can be manufactured as follows. First, an active material is applied to the current collector 11 so as to leave a non-coated section 11A free of the active material layer on the surface of the current collector 11 at one end thereof in the longitudinal direction X1 of the current collector 11.

Thereafter, a ridge 13 extending in the width direction X2 is formed at the non-coated section 11A free of the active material layer between the tab welding section 11a to which the terminal tab 14 is welded and the electrode active material layer 12. Such a ridge 13 can be formed by an appropriate processing technique, for example, by folding by pressing.

Next, a plurality of the electrodes each having the ridge 13 are stacked with the separator 4 interposed therebetween. Specifically, for example, the cathode 2, the anode 3 and the separator 4 shown in FIG. 1, which are formed in a strip shape, are cut in advance into cell size, and then stacked in the order of the anode 3, the separator 4 and the cathode 2. An alternate method that can be employed includes feeding out the strip-shaped cathode 2, anode 3 and separator 4 continuously from a roll of wound cathode 2, anode 3 and separator 4 so as to sequentially stack the cathode 2, anode 3 and separator 4, followed by cutting the resulting stack into cell size.

In this instance, when the electrolyte layer serving as the separator 4 is being stacked, the electrolyte 4A spreads in the surface direction of the current collector 11. However, the ridge 13 is formed on the non-coated section 11A free of the active material layer before the stacking, and this ridge 13 functions as a weir that prevents the electrolyte 4A from flowing over the ridge 13 to wet the tab welding section 11a.

Then, a terminal tab 14 is welded by attaching technique such as welding to the tab welding section 11a in the non-coated section 11A devoid of an active material layer such that the terminal tab 14 protrudes from the current collector 11. Specifically, welding electrodes (not shown) are disposed above and below the electrode stack, and the terminal tab 14 and the non-coated section 11A of the electrode plate 10 are sandwiched by the welding electrodes from above and below to perform welding.

Next, referring to the annexed drawings, the effects obtainable by the lithium ion secondary battery 1 and the method for manufacturing the same are described below. As shown in FIG. 2 and FIG. 3, in the present embodiment, since the ridge 13 extending in the width direction X2 is provided between the tab welding section 11a at the non-coated section 11A of the current collector 11 and the active material layer 12, the migration of electrolyte 4A having overflown from the coated section during stacking of the electrodes can be regulated by the ridge 13. That is, when the electrolyte leakage prevention zone is a ridge 13 as in the present embodiment, the ridge 13 becomes a weir that can prevent the electrolyte 4A from flowing over the ridge 13 and leaking to the side of the tab welding section 11a. Thus, it is possible to prevent the tab welding section 11a after stacking from being stained with adhering electrolyte 4A having overflown from the coated section, and to ensure a secure welding of the terminal tab 14 under predetermined welding conditions.

As a result, a decrease in the welding strength of the terminal tab 14 can be suppressed, which, in turn, can prevent the welded terminal tab 14 from being displaced or detached due to external vibration or impact, so that a disconnection or the like can be prevented and a decrease in reliability of conduction in the secondary battery can be suppressed.

Further, in the present embodiment, since the ridge 13 is provided over the entire length of the non-coated section 11A in the width direction X2, the coated section coated with the active material 4A and the tab welding section 11a of the current collector 11 at its non-coated section 11A devoid of an active material layer can be completely separated without a gap by the ridge 13, thereby enabling a more secure prevention of leakage of the electrolyte 4A to the side of the tab welding section 11a during stacking.

Further, in this embodiment, by performing the pressing to fold the non-coated section 11A devoid of an active material layer before or after the step of applying the active material while leaving a non-coated section 11A devoid of an active material layer on the current collector 11, it is possible to easily form the ridge 13. By adopting the pressing, it is possible to continuously and efficiently perform the subsequent step of stacking multiple electrodes having the ridge 13 formed thereon while interposing the electrolyte layer therebetween.

As described above, the method for producing a lithium ion secondary battery according to the present embodiment prevents the electrolyte 4a from adhering to the terminal tab welding section 11a to which the terminal tab 14 is welded, thereby enabling suppression of decrease in the welding strength of the terminal tab 14 and ensuring a secure attachment of the terminal tab 14.

One embodiment of the method for producing a lithium ion secondary battery according to the present invention has been explained above; however, any appropriate modifications can be made as long as such modifications do not deviate from the essence of the present invention.

For example, in the above embodiment, the ridge 13 is formed so as to protrude from the surface of the current collector 11 on which the electrode active material layer 12 is formed, and is formed by mountain-folding the current collector; however, the ridge 13 is not limited to this configuration.

For example, as in the modified example shown in FIG. 4, the electrolyte leakage prevention zone may be a groove 15 having a shape formed by valley-folding with respect to the surface of the current collector 11 on which the electrode active material layer 12 is formed.

In this instance, a groove is formed between the separator 4 (electrolyte layer) and the tab welding section 11a, into which the electrolyte 4a overflowing from the coated section is allowed to flow; therefore, the groove can prevent the electrolyte 4a from leaking to the side of the tab welding section 11a.

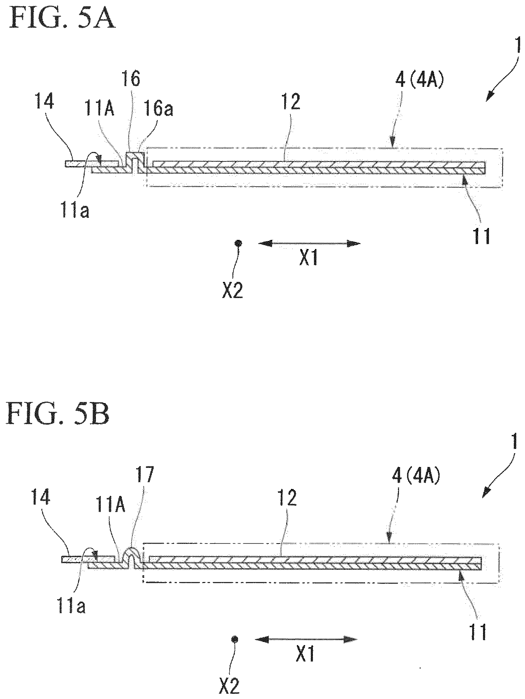

Further, as another example of the shape of electrolyte leakage prevention zone, the ridge 16 may have a shape as shown in FIG. 5A, which has a top face 16a. Alternatively, as shown in FIG. 5B, it is also possible to adopt a ridge 17 in which the ridge shape is curved as a whole in a side view.

Further, as a matter of course, the electrolyte leakage prevention zone may include both of the ridge and the groove.

Further, in the above embodiment, the ridge 13 is continuously formed over the entire length of the non-coated section 11A of the current collector 11 in the width direction X2; however, the present invention is not limited to this configuration, and the electrolyte leakage prevention zone may be formed discontinuously in the width direction X2. That is, there is no particular limitation as long as it is possible to prevent the electrolyte 4A from leaking to the tab welding section 11a during stacking of the electrodes, and the electrolyte leakage prevention zone is provided so as for the electrolyte 4A to leak while avoiding the tab welding section 11a.

In the method for manufacturing the lithium ion secondary battery 1 according to the above embodiment, the step of forming the ridge 13 on the non-coated section devoid of an active material layer is performed after the step of applying the active material to the surface of the current collector 11 at one end thereof in the longitudinal direction X1; however, the sequence of these steps may be reversed, and the active material layer may be formed after the ridge 13 has been formed. That is, there is no particular limitation as long as the electrolyte leakage prevention zone is formed at a time when the electrolyte 4A leaks from the coated section.

Further, various other factors such as the number of stacked electrodes, the shape and size of the terminal tab 14, and the area of the non-coated section 11A devoid of an active material layer are not limited to the embodiments described above, and may be appropriately set.

For example, in the above embodiment, the active material is applied to one surface of the current collector 11 while leaving the non-coated section 11A free of an active material layer. However, the present invention is not limited to this configuration as long as the active material is coated on at least one surface of the current collector 11, and the active material may be coated on both surfaces of the current collector 11 or only on the other surface (the surface opposite to the aforementioned "one surface").

The features of the embodiments described above can be appropriately replaced by known equivalents as long as such replacement does not deviate from the essence of the present invention.

### Industrial Applicability

According to the lithium ion secondary battery and the method for producing the same of the present invention, it is possible to prevent the electrolyte from adhering to the terminal tab attachment section, thereby enabling suppression of decrease in the bonding strength of the terminal tab and ensuring a secure attachment of the terminal tab.

### DESCRIPTION OF THE REFERENCE SIGNS

1 Lithium ion secondary battery
2 Cathode
3 Anode
4 Separator (electrolyte layer) 4A Electrolyte
10 Electrode plate
11 Current corrector
11A Non-coated section devoid of an active material layer
11a Tab welding section (tab attachment section)
12 Electrode active material layer
13, 16, 17 Groove (electrolyte leakage prevention zone)
15 Ridge (electrolyte leakage prevention zone)
14 Terminal tab
X1 Longitudinal direction (first direction)
X2 Width direction (second direction)

## Claims

1. A lithium ion secondary battery comprising: an electrode stack comprising a cathode and an anode which are stacked with an electrolyte layer interposed therebetween; and a terminal tab,
wherein one of the cathode and the anode has, on at least one of surfaces of its current collector, a coated section having an active material layer and a non-coated section devoid of an active material layer,
the terminal tab is attached to the non-coated section,
the non-coated section is positioned at one end of the current collector in a first direction extending in one direction of the electrode stack, and
the non-coated section of the current collector has an electrolyte leakage prevention zone which is at least one ridge or groove extending, as viewed in plan, in a second direction orthogonal to the first direction between a tab attachment section to which the terminal tab is attached and the active material layer.

2. The lithium ion secondary battery according to claim 1, wherein the electrolyte leakage prevention zone extends over entire length of the non-coated section in the second direction.

3. The lithium ion secondary battery according to claim 1 or 2, wherein the electrolyte leakage prevention zone protrudes from the surface of the current collector, on which the active material layer is formed.

4. A method for manufacturing a lithium ion secondary battery comprising: an electrode stack comprising a cathode and an anode which are stacked with an electrolyte layer interposed therebetween; and a terminal tab,
wherein one of the cathode and the anode has, on at least one of surfaces of its current collector, a coated section having an active material layer and a non-coated section devoid of an active material layer,
the method comprising: a step of applying an active material to a surface of the current collector, while leaving a non-coated section devoid of an active material layer on the surface of the current collector at one end thereof in a first direction extending in one direction of the current collector;
a step of forming an electrolyte leakage prevention zone at the non-coated section between a tab attachment section to which the terminal tab is attached and the active material layer, the electrolyte leakage prevention zone being at least one ridge or groove extending, as viewed in plan, in a second direction orthogonal to the first direction;
a step of stacking a plurality of electrodes, each having the electrolyte leakage prevention zone formed thereon, with the electrolyte layer interposed between the electrodes; and
a step of attaching the terminal tab to the tab attachment section in the non-coated section devoid of an active material layer such that the terminal tab protrudes from the current collector.

5. The method according to claim 4, wherein the electrolyte leakage prevention zone is formed by folding by pressing.
